Europäisches Patentamt

(19) European Patent Office

Office européen des brevets

(11) Publication number: **0 021 417**
**A1**

## EUROPEAN PATENT APPLICATION

(21) Application number: **80103592.4**

(22) Date of filing: **25.06.80**

(51) Int. Cl.³: **B 29 F 3/08,** B 29 D 23/04

(30) Priority: **30.06.79 GB 7922807**

(43) Date of publication of application: **07.01.81**
**Bulletin 81/1**

(84) Designated Contracting States: **DE FR IT NL**

(71) Applicant: **Victroplas Limited, Burcol Works Radway Road, Shirley Solihull, West Midlands (GB)**

(72) Inventor: **Liebisch, Wolfgang Friedrich, 9 Albert Road, Reading Berkshire (GB)**

(74) Representative: **Leach, John Nigel et al, Forrester & Boehmert Widenmayerstrasse 5/IV, D-8000 München 22 (DE)**

(54) Method and apparatus for plastic extrusion and thereby produced elongated members.

(57) A method and apparatus for producing an elongate member of thermoplastics material (M) having projections (20) of peripherally assymetric configuration at axially spaced positions along the lenght of the extrudate. An extrudate contacting element (13) is provided on the die downstream of the die exit to contact one peripheral extent of the extrudate (M) to permit or prevent formation of a projection on this region whilst the extrudate is free to expand over the remainder of the peripheral extent to form the projections.

0021417

TITLE:

"Plastic Extrusion"

This invention relates to the manufacture of elongated members of thermoplastics material.

DE OS P28 34210.1 discloses a method of producing an article which simulates natural bamboo and which comprises continuously extruding said material through a die while in a hot and fluid state, into a region which permits increase in external transverse dimension of the extrudate, cooling the material downstream of the die, transporting the material away from the die and intermittently slowing the speed of transport relative to the speed of extrusion at predetermined lengths of extrusion thus to produce regions of greater external cross sectional dimensions of the extruded member to provide axially spaced node-like projections of irregular shape on the member.

Until the making of the present invention it was though impossible for projections to be formed, by the above described method which did not extend around the whole periphery of the extrudate or which did not result in a distortion of the basic shape of the extrudate.

An object of the invention is to provide such elongated members of thermoplastic material having regions of greater external cross-sectional dimensions at axially spaced positions and which are of assymetric peripheral extent.

According to one aspect of the invention we provide a method of producing an elongate member of thermoplastic material comprising continuously extruding said material along an axis of extrusion through a die while in a hot and fluid state into a projection formation region which permits of increase in the external transverse dimensions of the extrudate to a lesser extent over one peripheral extent than over another peripheral extent, cooling the extruded material downstream of the region, transporting the material away from the die and intermittently slowing the speed of transport relative to the speed of extrusion at predetermined lengths of extrusion thus to produce projections of greater external cross-sectional dimensions of the extruded member at axially spaced positions and which are assymetric relative to the axis of extrusion.

According to another aspect of the invention we provide an apparatus for producing an elongate member of thermoplastic material comprising a means for continuously extruding said material along an axis of extrusion through a die while in a hot and fluid state into a projection formation region which permits of increase in external transverse dimensions of the extrudate to a lesser extent over one peripheral extent than another peripheral extent, means for cooling the extruded material downstream of the said region, means downstream of the cooling means for gripping the cooled material and means for driving the gripping means to transport the material from the die at a cyclically variable speed to produce projections at axially spaced positions which are assymetric relative to the axis of extrusion.

Surprisingly we have found with the present invention that the basic cross-sectional shape of the extrudate is maintained and that a projection of

0021417

essentially the same shape as the cross-sectional shape of the peripheral extent of the extrudate in which the projection is formed is created although of greater transverse extent than the remainder of that peripheral extent.

Said region may have an extrudate contacting element which contacts the extrudate over said one peripheral extent to limit expansion of each projection and preferably said element is heated.

Preferably said element prevents any expansion of the extrudate over said one peripheral extent whereby a projection is formed only over said another peripheral extent.

Preferably a projection is formed around the whole of the periphery of the extrudate except for said one extent.

The extrudate may be of D-section having a semicylindrical surface, and a planar surface, said one extent comprising the whole of the planar surface of the extrudate.

Alternatively, the extrudate may be square and the projection formed on one, two or three sides thereof.

Further alternatively, the extrudate may be circular and the projection may extend only partly around the circumference of the extrudate.

Preferably the extrudate is tubular, the die having a mandrel over which the extrudate is formed and the mandrel extending into said region at least to a longitudinal position co-extensive with the downstream end of said element.

Preferably the method includes the step of rapidly cooling the surface of the extrudate a short distance downstream of the die exit.

Rapid cooling may be achieved by means of a water jet directed onto the surface of said other extent of the extrudate a short distance downstream of the die exit. Thereafter the extrudate may be cooled further, for example, by means of a water bath downstream of the water jet.

The water jet may be directed onto the surface of the extrudate a short distance downstream of the die exit to establish an unstable wave front on the extrudate to cause irregularities on the surface of the projections.

The extrudate may simulate, over said other peripheral extent, natural bamboo having a plurality of node portions provided by said projections and separated by anti-node portions of substantially constant cross-section throughout their length, the node portions being projections having at least one cross-sectional dimension which is greater than the corresponding cross-sectional dimension of the anti-node portions and having a plurality of irregularities in the surface thereof.

The thermoplastics material may be a rigid thermoplastics material such as polyvinyl chloride.

The material may be extruded onto, so as to embed a reinforcing member or members. The reinforcing member may comprise a tube of steel, aluminium or aluminium alloy.

According to a further aspect of the invention we provide an elongate member of thermoplastics material comprising a plurality of projections of peripherally assymetric configuration at axially spaced positions along the length of the extrudate.

The extrudate may be of non-circular cross-section at least at axial locations between the projections.

Particularly, in the case where the extrudate is of D-section with projections formed over the semi-circular peripheral extent the extrudate simulates, over said other peripheral extent, natural bamboo having a plurality of node portions provided by said projections and separated by anti-node portions of substantially constant cross-section throughout their length, the node portions being projections having at least one cross-sectional dimension which is greater than the corresponding cross-sectional dimension of the anti-node portions and having a purality of irregularities in the surface thereof. This simulation occurs since the method produces projections which vary from projection to projection and which have axial and circumferential irregularities due to the rapid chilling of the water jet, together with an unstable wave front of the water set up on the extrudate.

The resulting D-section extrudate is particularly useful as a trim for furniture and the like articles since it can be secured in position by suitable adhesive applied to the flat surface unprovided with projections.

The invention will now be described in more detail by way of example with reference to the accompanying drawings wherein:-

FIGURE 1 is a side elevation of a length of material of D-section, the curved surface of which simulates a natural bamboo and made by a method embodying the present invention;

FIGURE 2 is a section through part of the extrudate of Figure 1;

FIGURE 3 is a diagrammatic view of an apparatus for producing the material of Figure 1;

FIGURE 4 is a section depicting one stage during the extrusion of the material shown in Figure 1 showing the formation of a part simulating an anti-node of natural bamboo; and

FIGURE 5 is a section depicting another stage of extrusion of the material shown in Figure 1 and showing the formation of a part simulating a node of natural bamboo.

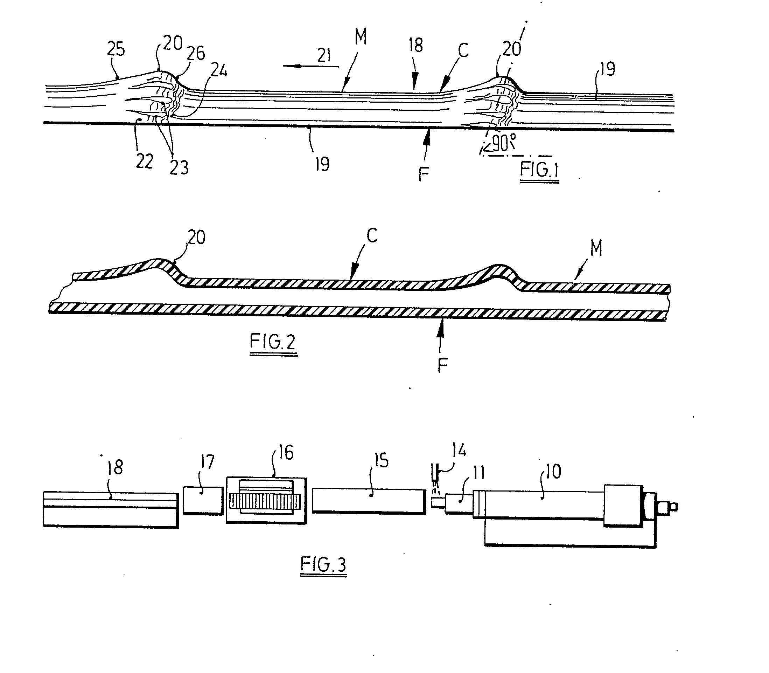

Referring first to Figures 3, 4 and 5 a conventional plastics material extruder 10 plasticises rigid polyvinyl chloride and extrudes it through a die 11 containing a central mandrel or pin 12 to produce a tubular extrudate. The die is also provided with an extrudate contacting element 13 which is arranged to contact the extrudate in the region where no projection is required. The extrudate of the present example is of D-section and since no projection is required on the flat surface F of the extrudate the element 13 is arranged to contact this surface with a flat surface 13a.

Other cross-sectional shapes may be used such as circular, hexagonal or square shape, if desired, and the element 13 may be arranged and shaped so as to contact any desired peripheral extent of the extrudate where a projection is not required. If a projection is not required over more than one peripheral extent of the extrudate then an appropriate number of appropriately located and shaped elements 13 are provided. The element or elements 13 is or are heated, by conduction from the die or by a separate heater, so that the extrudate is maintained heated and hence fluent whilst in contact with the element(s) 13.

The extrudate then passes a water jet 14 and through a water bath 15 which cools it sufficiently to enable it to be gripped. The material when issuing from the die 11 is in a hot and fluid state.

The cooled material then passes through a take-off means 16 which comprises a pair of caterpillar devices between which the material is gripped. The take-off means 16 pulls the material away from the die and prevents any build-up in front of the die. If the speed of the take-off means 16 is the same as the speed of the extrusion the material is of constant cross-sectional shape. The material then passes to a saw 17 in which it is sawn to required lengths and then passes to a table 18 which is inclined transversely to the direction of movement of the material and accumulates the material at its lower edge.

The caterpillar devices of the take-off means 16 are driven by way of a shaft reduction gear, clutch and variable speed gear from a motor. The clutch is engaged or disengaged by an air cylinder. Operation of the air cylinder is controlled by a timing device, adjustable to vary the respective times for which the clutch is engaged and disengaged. Any other form of take-off means which can provide a cyclically variable take-off speed may be provided.

Referring now to Figures 1 and 2, the extruded material is indicated at M and comprises a series of axially spaced portions 19 of substantially constant tubular D cross-section, the curved surfaces of which simulates the anti-nodes of natural bamboo. Between adjacent portions 19 are projections 20 which simulate the nodes of natural bamboo. The direction of extrusion is indicated by the arrow 21. It will be seen that the projections 20 have axial ribs 22 separated by axial recesses 23 and circumferential irregularities 24 which simulate natural bamboo. It will also be noted that the slope of each projection is less steep on the leading side 25 thereof than on the trailing side 24 and that a section taken through the maximum cross-section of the node is inclined at less than $90^{\circ}$ to the longitudinal axis of the extrudate.

When the take-off means 16 is stationary or withdraws the extrudate at a relatively slower speed material which continues to come our of the extruder forms a distension on the curved surface C of the tube as indicated in Figure 2 thus producing the projection 20 and increasing the bore of the tube. No projection is formed on the flat surface F due to the element 13. When the transport device again starts to move or withdraws the extrudate and at its normal rate, the material is extruded as a substantially constant cross-sectional area tube until the transport device again stops or slows.

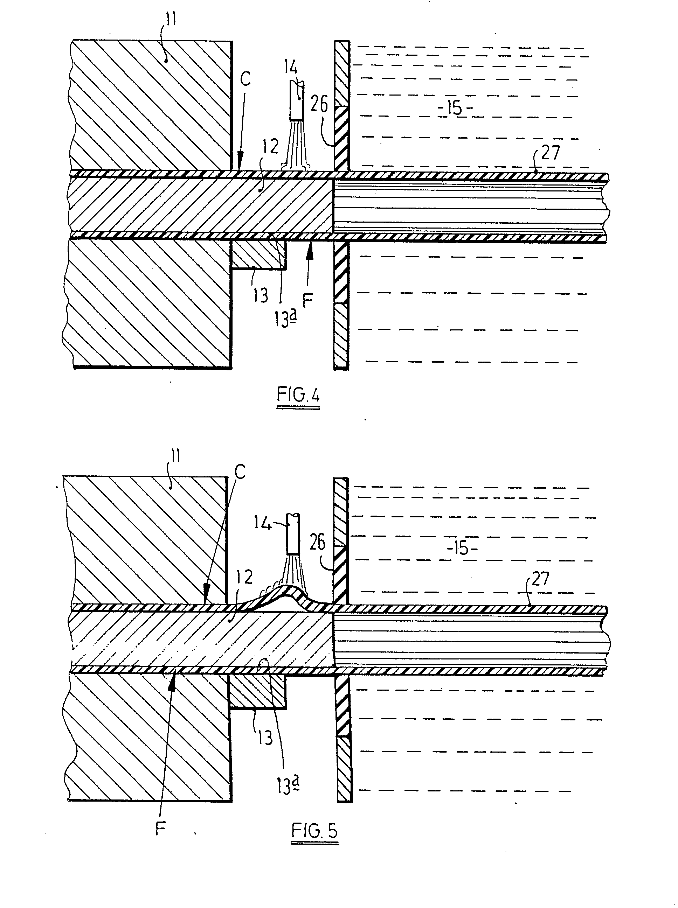

This process is shown in Figures 4 and 5. In these Figures the die is indicated at 11, the central mandrel or pin at 12 and the extrudate contacting element at 13. Adjacent the die is a sealing member 26 of rubber or other flexible material provided with an aperture through which material extruded from the die passes and which sealingly engages the surface of the extrudate and prevents exit of water from the water bath 15.

Figure 4 shows the situation when the take-off means 16 is operating to remove extruded material from the die at a constant speed. Material extrudes as a tubular member 27 of constant 'D' cross-section. When the take-off means ceases to remove material from the die, the

0021417

material which continues to extrude from the die forms a projection 20 in the annular part of the tube wall, as it is permitted to extend into a free space downstream of the die exit and hence the projections 20 are formed without any mechanical constraint being applied to the curved surface C of the extrudate. Because the element 13 contacts the flat surface F of the extrudate, no projection is formed over this peripheral extent of the extrudate.

Water playing on the surface of the tube as it emerges from the die 11 chills the curved surface of the extrudate and forms a semi-solid skin whilst the remainder of the tube remains fluent and thus the skin is susceptible to take up the shape of ripples formed in the wave front of the water as the tune advances after an arrest. Also, the rapid cooling causes longitudinal contraction wrinkles to be formed in the surface of the nodes as further material beneath the surface skin cools which, as the tube enters the water bath 15 are consolidated into the recesses 22 and 23.

The projections 20 contact the boundary of the aperture in the member 26 when the take-off means 16 resumes operation. As the extruded material is still fluent at this stage, the contact of the outer surface of projection 20 with the member 26 can contribute to the forming of ribs and recesses to simulate the nodes of bamboo. If desired, the aperture in the member 26 may have a serrated or other appropriate profile to assist the formation of the ribs and recesses in the projection. Because the member 26 is of flexible material, however it does not act to reduce, at least significantly, the size of the projections.

As mentioned above, the member is preferably made from a rigid polyvinyl chloride. If desired, the tubular member could be reinforced by an internal tube of, for example, steel or aluminium, or aluminium alloy or G.P.P. in which case the thermoplastic coating will be put on via a cross head. In this case, also it will be possible to use less rigid plastics than rigid PVC. If desired, more than one reinforcing member may be used such as a plurality of wires embedded at circumferentially spaced positions in the wall of the extrudate.

It is envisaged that normally the material will be tubular because of material expense. However it is within the scope of the invention to provide solid material and to provide material, tubular, reinforced tubular or solid which is other than of generally D cross-section. For example, square, hexagonal or circular cross-section with a projection or projections extending only part way around the peripher of the extrudate.

The surface of natural bamboo has a longitudinally extending pattern or grain. This may be simulated by incomplete mixing of colouring thereof. For example, an appropriate colouring matter may be added to the extruded material at spaced time intervals.

The saw 17 may be set to saw the extruded material at an angle to provide a point on each cut length of material to assist its being inserted into the ground, as bamboo for horticultural purposes may be required to be used. If desired the anti-nodes may be of other than constant cross-section by appropriate variation in the relative speed of extrusion and transport.

The apparatus shown in Figure 3 may be provided with adhesive applying means, for example, arranged to apply an adhesive tape to the flat surface F between the take-off means 16 and saw 17. If desired other fixing means may be provided on the extrudate, for example, an adhesive may be applied directly to the flat surface F or some form of mechanical fixing means may be secured to the flat surface F.

Preferably the mandrel or pin 12 extends axially of the extrudate to a location adjacent to the entry to the water bath. This is preferred since it ensures no distortion of the extrudate except in the region of the projection 20. Thus in the case of a D section extrudate, for example, the flat surface F is maintained in a single plane thereby facilitating securing of the extrudate to a flat surface when it is desired to act as a trim strip.

CLAIMS:

1    A method of producing an elongate member of thermoplastic material comprising continuously extruding said material along an axis of extrusion through a die while in a hot and fluid state into a projection formation region which permits of increase in the external transverse dimensions of the extrudate, cooling the extruded material downstream of the region, transporting the material away from the die and intermittently slowing the speed of transport relative to the speed of extrusion at predetermined lengths of extrusion thereby to produce projections at axially spaced positions characterised in that said projection formation region permits of increase in the external transverse dimension of the extrudate to a lesser extent over one peripheral extent than over another peripheral extent, thereby to produce said projections which are assymetric relative to the axis of extrusion.

2.    The method claimed in Claim 1 wherein said region has an extrudate contacting element which contacts the extrudate over said one peripheral extent to limit expansion of each projection.

3.    The method as claimed in Claim 2 wherein said element is heated.

4.    The method claimed in Claim 2 or Claim 3 wherein said element prevents any expansion of the extrudate over said one peripheral extent whereby a projection is formed only over said other peripheral extent.

5.    The method claimed in any one of the preceding claims wherein a projection is formed around the whole of the periphery of the extrudate except for said one extent.

- 13 -

0021417

6. The method claimed in any one the preceding claims wherein the extrudate is of D-section having a semicylindrical surface, and a planar surface, said one extent comprising the whole of the planar surface of the extrudate.

7. The method claimed in any one Claims 2 to 6 wherein the extrudate is tubular, the die having a mandrel over which the extrudate is formed and the mandrel extending into said region at least to a longitudinal position co-extensive with the downstream end of said element.

8. The method claimed in any one of the preceding claims wherein the extrudate is rapidly cooled a short distance downstream of the die exit.

9. The method claimed in Claim 8 wherein said rapid cooling is achieved by means of a water jet directed onto the surface of said other extent of the extrudate a short distance downstream of the die exit to establish an unstable wave front on the extrudate to cause irregularities on the surface of the projections.

10. The method claimed in Claim 9 wherein thereafter the extrudate is cooled further.

11. The method claimed in Claim 9 or Claim 10 wherein the extrudate simulates, over said other peripheral extent, natural bamboo having a plurality of node portions provided by said projections and separated by anti-node portions of substantially constant cross-section throughout their length, the node portions being projections having at least one cross-sectional dimension which is greater than the corresponding cross-sectional dimension of the anti-node portions and having a plurality of irregularities in the surface thereof.

12. The method as claimed in any one of the preceding claims wherein the material is extruded on to, so as to embed at least one reinforcing member.

13. The method as claimed in any one of the preceding claims wherein the extrudate has a flat surface over said one peripheral extent and adhesive is applied to said flat surface.

14. An apparatus for producing an elongate member of thermoplastic material comprising a means for continuously extruding said material along an axis of extrusion through a die while in a hot and fluid state into a projection formation region which permits of increase in external transverse dimensions of the extrudate, means for cooling the extruded material downstream of the said region, means downstream of the cooling means for gripping the cooled material and means for driving the gripping means to transport the material from the die at a cyclically variable speed characterised in that said projection formation region permits of increase in the external transverse dimensions of the extrudate to a lesser extent over one peripheral extent than another peripheral extent thereby to produce projections at axially spaced positions and which are assymetric relative to the axis of extrusion.

15. An elongate member of thermoplastics material comprising a plurality of projections of peripherally assymetric configuration at axially spaced positions along the length of the extrudate.

16. An elongate member as claimed in Claim 15 wherein the extrudate is of D-section with projections formed over said other semi-circular peripheral extent and the extrudate simulates, over said other peripheral extent, natural bamboo having a plurality of node portions provided by said projections and separated by anti-node portions of substantially constant cross-section throughout their length, the node portions being projections having at least one cross-sectional dimension which is greater than the corresponding cross-sectional dimension of the anti-node portions and having a plurality of irregularities in the surface thereof.

0021417

FIG.1

FIG.2

F

FIG.3

FIG.4

FIG.5

European Patent
Office

**EUROPEAN SEARCH REPORT**

0021417
Application number

EP 80 10 3592.4

| Category | Citation of document with indication, where appropriate, of relevant passages | Relevant to claim |
|---|---|---|
| D | DE - A1 - 2 834 210 (VICTROPLAS LTD.) <br> * fig. 7 * | 1,14, 15 |
| A | DE - A - 1 529 984 (KUNSTSTOFFWERK GEBRÜDER ANGER GMBH & CO.) <br> * claims 1 to 10 * | |
| A | CH - A - 528 966 (ROLLMAPLAST AG) <br> * claims * | |

**DOCUMENTS CONSIDERED TO BE RELEVANT**

**CLASSIFICATION OF THE APPLICATION (Int. Cl.³)**

B 29 F    3/08
B 29 D    23/04

**TECHNICAL FIELDS SEARCHED (Int.Cl.³)**

B 29 D    23/04
B 29 F    3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 25-09-1980 | BITTNER |

EPO Form 1503.1    06.78